# EUROPEAN PATENT APPLICATION

(11) **EP 1 398 944 A2**
(43) Date of publication of application: **17.03.2004**
(21) Application number: 03255646.6
(22) Date of filing: 10.09.2003
(51) Int. Cl.: H04M 3/51

(54) **Modular dialing controller with interchangeable subscriber service capability**

(30) Priority: 10.09.2002 CA 2403043
(71) Applicant: Gill, Keith, Regina, Saskatchewan S4N 0P6 (CA)
(72) Inventor: Gill, Keith, Regina, Saskatchewan S4N 0P6 (CA)
(74) Representative: Davies, Robert Ean

(57) **Abstract**

There is disclosed a modular dialing controller with an interchangeable subscriber service module which allows for the rapid conversion of the apparatus for use on different types of telco systems or in environments with varying incoming line configurations. Interoperability of the device in multiple environments is increased, which will increase the commercial utility of such devices. Also disclosed is a method of conversion of a modular dialing controller with different subscriber services by exchanging a subscriber service module. The subscriber service module itself is also shown.

## Description

This invention relates to hardware used in the conduct of telephone contact campaigns, and more specifically deals with a modular dialing controller which allows for rapid conversion of the device for use in environments with different types of outside line configurations.

### BACKGROUND

Telephone communication is a nearly universal method of communication in our society. Telephones provide a fast and efficient means for contacting someone at any time of the day or night anywhere in the country or even the world. Where large number of people need to be contacted, for example in telemarketing applications, automated outbound dialing systems or used to expedite the contacting as many people as possible by telephone in a limited time period. There are three basic components to an automated outbound dialing system. First, there is a computer in which a database containing the data records is stored. Second, there is an automated dialer into which telephone numbers are downloaded from the host computer for automated dialing and thirdly there are human operators to talk to the people contacted. In the operation of such a system, a set of telephone numbers are identified in the computer and are downloaded into the automated dialer either at the beginning of the work day or as operators are available to talk. As soon as human operators are ready to talk, the automated dialer begins dialing and proceeds to take the appropriate action as the telephone calls are answered. The appropriate action usually consists of transferring the line to a human operator.

To date, the majority of the dialing apparatus which have been used to conduct telemarketing campaigns of this type are personal computers equipped with dialogic boards. The dialogic board is a dialing peripheral which can be connected within or to a PC which allows for the PC to dial or answer telephone calls using an operator telephone also connected to the PC and board. The problem with using apparatus of this type is that the entire system is cumbersome and expensive insofar as a PC with specialized hardware is required by each human operator. Furthermore an elaborate computer network system is required. Overall this type of an installation is too cumbersome to use in the present day in anything more than a very small or very rudimentary installation.

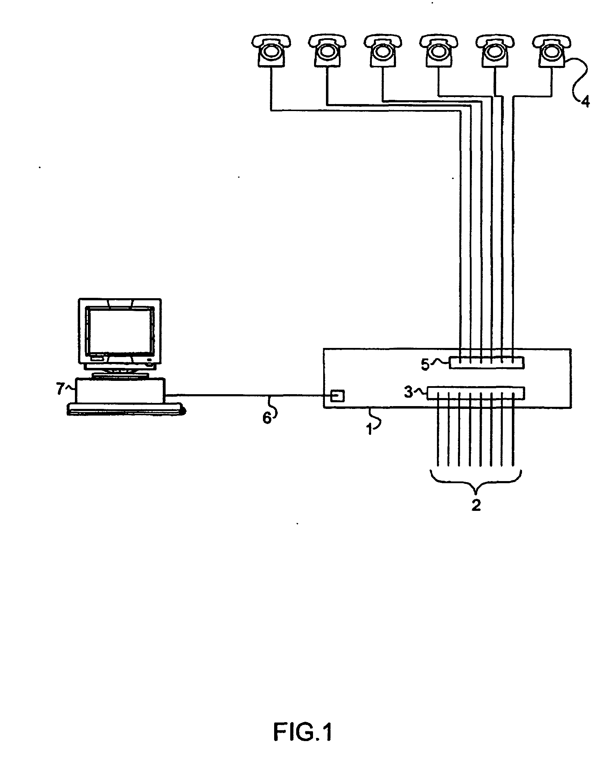

Figure 1 shows one embodiment of a multiline dialing system which employs a specific hardware dialer attached to a server computer and a plurality of operator telephones, as well as a plurality of telco lines. The basic requirements for a multiline dialer installation are a plurality of telephone company phone lines, which can be connected to the 'outside' half of the dialing apparatus, and then one or more internal operator telephones, computers or other operator stations are connected to the 'inside' half of the dialer circuitry. The remainder of the dialer hardware is then used to coordinate the dialing or answering of telephone calls on the outside telco lines and connecting those calls to operators staffing the operator stations internally connected to the dialer. One type of multiline dialing hardware which is often used in telemarketing applications is a predictive dialer. A predictive dialer is a telephone dialing system in which outbound calls are automatically placed in anticipation of telephone agents becoming available. The predictive dialer system will pace outbound telephone calls to maintain a specified target mean connection time as close as possible to those parameters specified by the system.

With the increasingly globalized nature of the economy, as well as the relatively recent exponential growth in the availability and use of advanced telecommunications services outside of North America, the market for multiline dialing equipment has increased both for equipment which is capable of being used in a domestic application of foreign markets, as well as for use in the conduct of international telemarketing campaigns. For example, companies in countries outside of North America will now conduct telemarketing campaigns to North America using the availability of relatively low cost international long distance rates, coupled with lower labour rates, to compete favourably with the providers of telemarketing services or call centre operations within North America.

One of the problems with the creation of multiline dialing hardware or systems which can be used in foreign markets is that of local telephone system compatibility in those particular markets. Telephone network infrastructures vary from country to country such that hardware which is manufactured to be used in conjunction with North American telco systems and standards will not necessarily work in another country or continent This provides a limitation to the marketability of multiline or predictive dialing equipment manufactured for the North American market, overseas. In order for a multiline dialing system to work in the local market, it must be physically capable of integrating with the telephone network of the local telephone system, as well as it must also be adapted to integrate with the dialing requirements of the local network. For example, physically speaking the dialer must be capable of accepting the plugging in of telephone lines in the specific plug-in format used in the local market -- for example if a local telephone network uses an entirely different wiring system, the multiline dialing hardware must be capable of plugging into that system, rather than using or providing only a set of plugins which is capable of accepting the connection of North American style telephone lines.

Similarly, in addition to meeting local wiring requirements, in order to be particularly efficient for use in foreign markets multiline dialing hardware must also be capable of integrating with the actual dialing requirements of the local system. For example, while it is fairly commonplace to now be able to use tone dialing in the dialing of telephone calls, also known as the use of DTMF signals, to communicate from a telephone handset to the telco CO switch and provide instructions or coordinates for the routing of a telephone call, in other countries it may still be the case that rotary or pulse dialing is the norm or that some other type of a tone or communication method is used between the local telephone handset and any telco switching equipment in order to instruct the switching equipment how to best complete the telephone call as requested by the user.

If it were possible to provide a multiline dialing system which were easily adaptable to different physical connection requirements of telephone systems in foreign markets, and/or different dialing methodologies, that multiline dialing system would be better positioned for sales and use in those foreign markets.

### SUMMARY OF THE INVENTION

It is the object of the present invention to provide a modular dialing controller which is easily convertible for use in varying jurisdictions with varying local telephone company infrastructures in place.

It is the further object of the present invention to provide a modular dialing controller which allows for the rapid conversion of the physical connectivity aspects of the modular dialing controller to accept outside telephone line or subscriber service connections of varying types.

It is the further object of the present invention to provide a modular dialing controller which allows for the rapid conversion of the physical connectivity aspects of the modular dialing controller to accept subscriber service connections of various types by including an interchangeable subscriber service module which can be rapidly removed or replaced therein, which interchangeable subscriber service module will contain all of the necessary hardware connections for connection of subscriber services of a particular type to the modular dialing controller along with a standardized connection to the remainder of the modular dialing controller. The interchangeable subscriber service module would also contain any other hardware or components which would be required to convert the analog or digital signals received from the particular subscriber service into a standard communications stream, which by way of the connection to the remainder of the modular dialing controller could be seamlessly integrated into the functionality of the modular dialing controller.

In addition to providing for the rapid physical connectability of outside telephone subscriber services of various types to a multiline dialing controller, the modular dialing controller of the present invention could also accommodate different local dialing requirements by also including on the interchangeable subscriber service module any location or infrastructure specific components or other electronic hardware or software required to dial telephone calls on the particular type of outside telephone line service which is connected to the interchangeable subscriber service module. The modular dialing controller could send the particulars of telephone numbers to be dialed to the dialing circuitry or components on the interchangeable subscriber service module provided the standardized connection of that card to the remainder of the modular dialing controller would accommodate same, and the circuitry and software contained on the interchangeable subscriber service module would then be capable of interpreting that telephone number information and generating the necessary dial tones or other system signals required to initiate a telephone call to that telephone number and then connect that telephone call to one of the human operators connected to the inside portion of the modular dialing controller.

It will be understood that by providing a modular dialing controller with an interchangeable subscriber service module, the rapid convertibility of the modular dialing system of the present invention for use in jurisdictions or locations with varying local telephone subscriber service or infrastructure is accomplished.

The interchangeable subscriber service module of the present invention could simply provide the capability for a rapid conversion of the physical connectivity of the modular dialing controller to the present invention, or by embedding the necessary software and hardware components on the interchangeable subscriber service module which are necessary to actually instigate the dialing of telephone calls on the local telephone subscriber service and connection of those calls to the remainder of the dialing controller through the standardized connection or interface between the interchangeable subscriber service module in the remainder of the dialing controller the utility of the device could be further improved.

The utility of the interchangeable subscriber service module concept of the present invention could be further improved or enhanced by providing an interchangeable subscriber service module for use in a modular dialing controller in accordance with the present invention which allowed for the connectivity of more than one type of subscriber service to the system at one time. It will be understood that in such a case the term 'subscriber service' as used herein would encompass the connection of more than one type of subscriber service and/or the combination of physical connectivity, circuitry or software which might be required to accomplish this.

For example, it might be desirable to provide an interchangeable subscriber service module that was capable of accepting the input of a plurality of PBX system lines as well as a plurality of outside telephone lines.

Another variation on this which could be envisioned would be to allow for the connection of a plurality of telephone lines to the interchangeable subscriber service module as well as one or more digital computer network lines such as a cable modem or the like, or other direct conductivity to the Internet or other computer network, which would allow for certain calls to be conducted using different digital or analog protocols. In this particular example some local calls could be dialled on standard local telephone lines, while if there were long distance telephone calls to be made the could be accomplished by connecting those particular calls through the digital network connection using voice over IP or some other type of a communications protocol.

The invention, a modular dialing controller for use in the origination of telephone calls via a subscriber service and connecting said telephone calls to at least one operator device, has a main controller unit and an interchangeable subscriber service module operatively connectable to said main controller unit and operatively connectable to a subscriber service. The subscriber service is the telco or other service connection through which telephone calls can be originated by the controller. The modular controller of this invention is convertible for use with various individual types or combinations of types of subscriber services by changing the interchangeable subscriber service module. The modular dialing controller can be converted from being connectable to a first subscriber service to being connectable to a second subscriber service by disconnecting a first interchangeable subscriber service module connectable to said first subscriber service from said main controller unit and connecting a second interchangeable subscriber service module connectable to said second subscriber service to said main controller unit.

In certain cases the different subscriber services may require different types of physical connections, or in other circumstances it may be the case that the physical connection for one type of subscriber service is the same as another but that there is additional or different circuitry required on the interchangeable subscriber service module to allow for proper performance on or in association with the subscriber service in question. It will be understood that all types of connectivity between the interchangeable subscriber service module and the subscriber service or services in question or the dialing controller and the subscriber service or services in question, and the necessary internal or interface changes which might be necessary to accommodate the connection of various types of subscriber services to the module or the controller, or between the module and the controller, are contemplated within the scope of the present invention.

Where it is desired to convert a modular dialing controller of the present invention from connection or connectability ot a first subscriber service to a seconde subscriber service, the second subscriber service might actually be a different type of service than the first, or it may also be the same type of service as the first with different call capacity. For example, one subscriber service could be a number of individual phone lines, and a second subscriber service might be a different number of phone lines.

The interchangeable subscriber service module could be connected to said main control unit via a subscriber service module interface. For example, the subscriber service module interface could be an internal slot or a cable. It will be understood that various other types of subscriber service module interfaces could also be used, so long as they accomplish the goal of providing a standardized interface by which interchangeable subscriber service modules could be interfaced with the remainder of the dialing controller and any such interface is contemplated within the scope of the present invention.

The modular dialing controller of the present invention could be connected in a conventional fashion to one or more operator devices, such as telephones, such that once a call was originated by the dialing controller on the subscriber service, that call could be connected to a free operator device.

In addition to a convertible modular dialing controoler, there is also disclosed a customizable modular dialing controller for use in the origination of telephone calls via a subscriber service and connecting said telephone calls to at least one operator device, said controller being customizable to be connectable to any of a plurality of subscriber services and comprising a main controller unit and one of a plurality of interchangeable subscriber service modules connectable to said main controller unit and operatively connectable to one of said plurality of subscriber services. This modular dialing controller can be customized to be operatively connectable to a desired subscriber service selected from said plurality of subscriber services by connecting a corresponding interchangeable subscriber service module that is operatively connectable to said desired subscriber services. Again multiple types or combinations of subscriber services could be accommodated by the creation of additional types of interchangeable subscriber service modules. The dialing controller of the present invention can be converted from being connectable to one desired subscriber service to being connectable to a second desired subscriber service by disconnecting said one of a plurality of interchangeable subscriber service modules from said main controller unit and connecting a second interchangeable subscriber service module connectable to said second desired subscriber service to said main controller unit.

There is also disclosed a modular dialing controller for use in the origination of telephone calls via a subscriber service and connecting said telephone calls to at least one operator device, said controller comprising a main controller unit; and a subscriber service module interface connected to said main controller unit and connectable to an interchangeable subscriber service module, said interchangeable subscriber service module operatively connectable to one of a plurality of subscriber services; wherein said modular dialing controller can be converted from being connectable to a first subscriber service to being connectable to a second subscriber service by disconnecting a first interchangeable subscriber service module connectable to said first subscriber service from said subscriber service module interface and connecting a second interchangeable subscriber service module connectable to said second subscriber service to said subscriber service module interface.

The invention also includes an interchangeable subscriber service module for use with a modular dialing controller in the origination of telephone calls via a subscriber service and connecting said telephone calls to at least one operator device, said interchangeable subscriber service module operatively connectable to one of a plurality of subscriber services and operatively connectable to said modular dialing controller , wherein said interchangeable subscriber service module can be used to customize said modular dialing controller for connection to a particular desired subscriber service by connecting a selected interchangeable subscriber service module which is connectable to said selected subscriber service to said modular dialing controller.

In addition to the dialer itself, the present invention also includes a modular dialing system for use in the origination of telephone calls via a subscriber service and connecting said telephone calls to at least one operator device, said system comprising a modular dialing controller comprising a main controller unit, said main controller having an operator device interface capable of connection to at least one operator device; and an interchangeable subscriber service module connected to said main controller unit and operatively connectable to a subscriber service. Also included in this system is at least one operator device operatively connected to said operator device interface. The modular dialing controller is convertible for connection to a different subscriber service by exchanging said interchangeable subscriber service module with a different interchangeable subscriber service module capable of connection to said different subscriber service.

Finally, the invention also includes a method of customizing a modular dialing controller to connect with a desired subscriber service, which comprises the steps of providing a modular dialing controller; determining a desired subscriber service; providing an interchangeable subscriber service module connectable to said modular dialing controller and connectable to said desired subscriber service; and connecting said interchangeable subscriber service module to said modular dialing controller.

### DESCRIPTION OF THE DRAWINGS:

While the invention is claimed in the concluding portions hereof, preferred embodiments are provided in the accompanying detailed description which may be best understood in conjunction with the accompanying diagrams where like parts in each of the several diagrams are labelled with like numbers, and where:
Figure 1 is a block diagram illustrating the hardware of a dialing environment as is presently known in the art.
Figure 2 is a block diagram illustrating one embodiment of a modular dialing controller in accordance with the present invention.
Figure 3 is a block diagram illustrating the hardware of a dialing environment using a modular dialing controller in accordance with the present invention.
Figure 4a is a block diagram illustrating an embodiment of a modular dialing controller with a first interchangeable subscriber service module that connects to a first subscriber service.
Figure 4b is a block diagram illustrating the same embodiment of a modular dialing controller as illustrated in Figure 4a, but with a second interchangeable subscriber module that connects to a second subscriber service.
Figure 5a is a block diagram of one embodiment of a modular dialing controller with an interchangeable subscriber service module controller connected internally by a slot.
Figure 5b is a block diagram of another embodiment of a modular dialing controller with the interchangeable subscriber service module connected externally by a cable.
Figure 6 is a block diagram illustrating an embodiment of a modular dialing controller with an interchangeable subscriber service module with connections to two different types of subscriber services.

### DETAILED DESCRIPTION OF THE ILLUSTRATED EMBODIMENTS:

One type of a specific hardware dialer system which avoids many of the complexities and cost considerations associated with the establishment of a call centre system using the dialogic board method outlined above is outlined in Figure 1 hereto. The dialer system shown in Figure 1 includes a central computer [7] in which a database of telephone numbers and other calling data would be contained, which is operatively connected to a dialing controller [1]. The dialing controller [1] of Figure 1 is connected to a subscriber service [2] with eight telephone lines using a subscriber service interface [3]. In this particular case six standard telephones, being the operator devices [4], are connected to the dialing controller [1] via an operator devices interface [5]. This type of dialing controller is designed for rapid installation in the North American telemarketing environment, insofar as the only steps that are required to get the dialing hardware connected for running are to connect the subscriber service [2] as delivered by the telco to the site to the dialing controller [1] using the standard RJ11/14 jacks or plugs provided thereon, and similarly to connect the operator devices [4] to the dialing controller [1] as well. The only other steps involved in getting this particular dialing controller [1] operating would be to install the necessary software on the central computer [7] and establish communications between the central computer [7] and the dialing controller [1].

The dialing controller [1] demonstrated in Figure 1 is a hardware dialing controller, versus the distributed network of PCs using dialogic boards or the like, described in basic detail in the description above. The convertability or customizable nature of the dialing controller of the present invention can be demonstrated in relation to either the prior art hardware dialing system outlined in Figure 1, or in relation to others as outlined further herein.

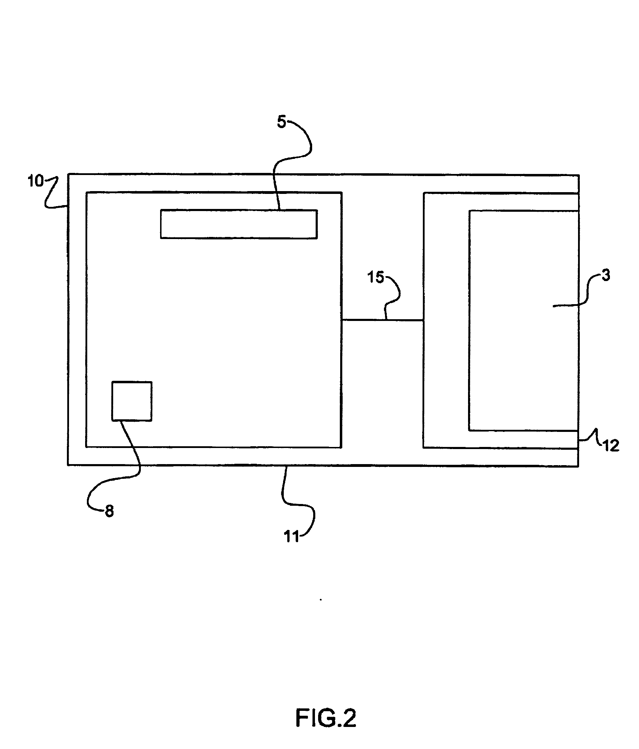

Figure 2 is a block diagram illustrating an embodiment of a modular dialing controller [10] in accordance with the present invention. The modular dialing controller [10] has a main controller unit [11] and an interchangeable subscriber service module [12] that are operably connected by a subscriber service module interface [15]. The interchangeable subscriber service module [12] is connectable to a subscriber service (not shown). The subscriber service could be any of type of service, with any physical connection and number of individual lines or it could be any combination of lines of more than one type of service and/or physical connections. For any specific application there would be a desired subscriber interface which would consist of a specific type of service, physical connection and number of incoming lines or a specific combination of types of service, physical connections and number of incoming lines.

Optionally, the modular dialing controller [10] might have a central computer interface [8] capable of connecting to a computer (not shown) and an operator device interface [5] capable of connecting to a number of operator devices (not shown).

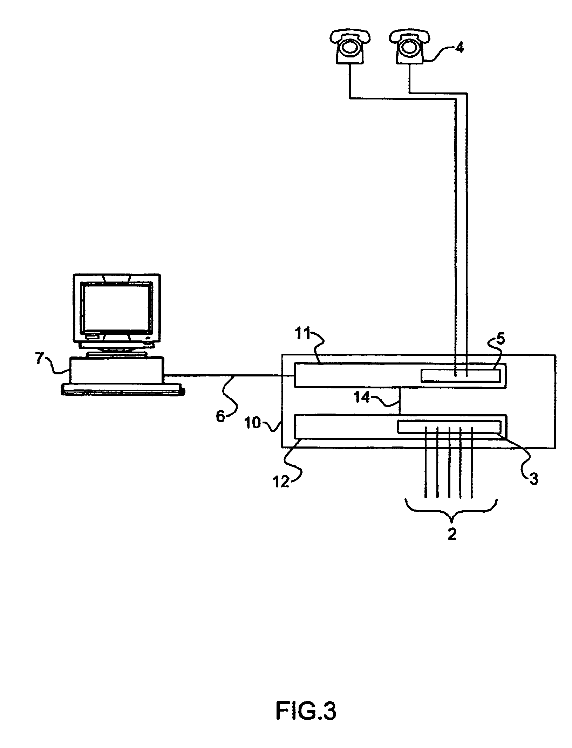

Figure 3 is a block diagram illustrating the hardware of a dialing environment using a modular dialing controller [10] as contemplated within the present environment. Although in most instances the dialing environment would consist of multiple lines, it is contemplated by the present invention that there may be cases where only one physical line would be necessary or desired, such as in the case of a computer network connection allowing voice over IP. Similar to the dialing environment illustrated in Figure 1, the present system includes a computer [7] in which a database of telephone numbers and other calling data could be contained, which is operatively connected to a modular dialing controller [10]. In this particular case two standard telephones, being the operator devices [4], are shown connected to the modular dialing controller [10] via an operator devices interface [5]. However, differing from the system illustrated in Figure 1, the modular dialing controller [10] is the modular controller illustrated in Figure 2. The modular controller includes the main unit controller [11] and the interchangeable subscription module [12] to a subscriber service with five telephone lines using a subscriber service interface [3] that is located on the interchangeable subscriber module interface [12].

The modular dialing controller [10] is similar to the dialing controller [1] shown in Figure 1, insofar as the internal switching hardware and hardware for connection to a central computer [7] and operator telephones [4] is concerned, but the connectivity components for the connection of the outside subscriber service [2] to the modular dialing controller [10] are located on an interchangeable subscriber service module [12] which can be removed and exchanged allowing for the reconfiguration of the modular dialing controller [10] of the present invention to interface with more or different types of subscriber telephone lines or telephone service [2], if necessary.

A subscriber service [2] is a set number of lines with specific service types and physical connections. A subscriber service [2] could also be a combination of a number of lines of a certain service and physical connection with another number of lines with a different service connection or physical connection.

For example, referring to the embodiment of Figure 1, it is envisioned that to provide a similar capacity modular dialing controller [10] the RJ11/145 connection ports and other necessary circuitry and connecting hardware to connect the modular dialing controller [1] itself to the subscriber service [2] would all be placed on the removable interchangeable subscriber service module [12]. The modular dialing controller [10] of the present invention could then be sold with that eight line interchangeable subscriber service module [12] in place, or alternatively the vendor could stock the modular dialing controller [10] without the interchangeable subscriber service module [12] in place and the interchangeable subscriber service module [12] could be placed in the modular dialing controller [10] at the time of sale such that different interchangeable subscriber service modules [12] could be sold relatively quickly. This would allow for quick reconfiguration of modular dialing controllers [1] for sale which would meet individual customer's connectivity requirements and capacity needs.

In terms of division of the functionality of the modular dialing controller [10] of Figure 2 into two severable function groups, one embodiment of the present invention will be explained, giving an example of a possible division. The first group of functions of the modular dialing controller [10], which would remain within the scope of the hardware functionality of the main controller unit [11], would potentially be the connectivity of telephone calls to the operator devices [4] and facilitating ongoing communication between the modular dialing controller [10] itself and the operator devices [4], as well as the receipt and handling of any particular dialing instructions or dialing data from a central computer [7] or other storage medium or memory bank of dialing instructions or coordinates which might be also connected to the modular dialing controller [10]. The main controller unit [11] hardware would also hand off dialing control instructions or control signals to the interchangeable subscriber service module [12] for the dialing of telephone calls on the subscriber lines or subscriber telephone service [2] connected to the interchangeable subscriber service module [12], as well as to potentially receive the connection of incoming telephone calls from the interchangeable subscriber service module [12] and facilitate the connections thereof to the operator devices [4] for handling by the human operators on the system.

The second group of functions of a modular dialing controller [10] which would be carried out by the interchangeable subscriber service module [12] would be the actual dialing or instigation of telephone calls on the subscriber service [2]. Also, the interchangeable subscriber service module [12] would be responsible for the actual physical connection between the modular dialing controller [10] itself and the subscriber service [2]. Finally, the functionality in this case would also include standardizing the input format of calls instigated or made on the subscriber services [2] of various types into a standard format for handing off to main control unit [11] and operator devices via a standard connection or subscriber service module interface [15] between the interchangeable subscriber service module [12] and the main controller unit [11].

It is particularly contemplated that the modular dialing controller [10] of the present invention might be digital hardware. It will be understood that with necessary modifications, the method and system of the present invention can also be practiced with an analog control unit but for the sake of description herein is assumed that the modular dialing controller [10] itself is a digital hardware piece. It will be understood however that the system method of the present invention could with the necessary modifications be practiced in either digital or analog hardware environments and both such scenarios are contemplated within the scope of the present invention.

In any event, in the case of a digital modular dialing controller [10], where the connection of calls between the outside subscriber service [2] and the internal operator devices [4] is done using digital voice or data streams, it will be understood that at the core of the system of the present invention would be the selection of any particular standard voice or data stream format which could be used by the modular dialing controller [10] in routing or otherwise handling the connection of outside telephone calls via a subscriber service [2] connected to the interchangeable subscriber service module [12] with an operator device [4] inside the calling environment connected to the modular dialing controller [12].

It would be necessary then either on or in conjunction with the interchangeable subscriber service module [12] to provide the interchangeable subscriber service module [12] with the ability to translate telephone calls or voice data received on incoming calls or calls connected via the outside subscriber telephone service connected to the interchangeable subscriber service module [12] into a standard communication protocol or data format for passing off for connection of those telephone calls to an operator telephone inside the calling environment by handing that telephone call off to the main control unit [11] via the subscriber service module interface [15] between the interchangeable subscriber service module [12] and the main control unit [11]. For example, a standard digital voice protocol might be selected as the standard protocol for use by the modular dialing controller [10] of the present invention. In that case, the interchangeable subscriber service module [12] itself or other hardware associated therewith, along with any necessary software components as well, would need to perform the function of translating the contents of the telephone call as connected by the modular dialing controller [10] through the interchangeable subscriber service module [12] as well as any ongoing conversation between the particular operator telephone switch and that particular outside telephone call as connected into that selected standard digital voice protocol. In order to render the modular dialing controller [10] adaptable to different types of outside subscriber service [2], the alternative interchangeable subscriber service modules [12] which would be manufactured for use with other types of outside subscriber service [2] along with containing the other necessary hardware or software components thereon or in association therewith to basically perform the same function of translating telephone calls made on those types of outside subscriber service [2] again into the same standard digital voice format chosen as the standard upon which the modular dialing controller [10] platform is based.

For example, where it is desirable to provide an interchangeable subscription module [12] which would allow the modular dialing controller [10] of the present invention to be connected to standard POTS telephone lines, the interchangeable subscriber service module [12] which is designed to accommodate this might include hardware or software components which would effectively convert the analog signal from those POTS telephone lines as calls are connected thereon into the standard digital format chosen for use in the internal environment of the modular dialing controller [10] and its associated operator devices [4]. In another embodiment where it is desired to use the modular dialing controller [10] and method of the present invention in, for example, a PBX digital telephone environment, the interchangeable subscriber service module [12] used in those circumstances could contain the necessary hardware or software to convert or directly translate telephone calls made in that digital environment for use in the environment of the present invention or to trigger or initiate calls through or directly by the PBX switch. In either case, it will be understood that the function of the interchangeable subscriber service module [12] as a card or component, would be to provide connectivity to various types of subscriber telephone service [2] for the purpose of making telephone calls thereon, and when telephone calls were made or connected using those various types of subscriber service [2], to translate them all into a standard format for use by the modular dialing controller [10] in connection to the operator devices [4].

It will also be understood that there might be a situation in which it would be desirable to convert the outside subscriber service [2] calls into analog telephone calls if it were desired to use analog telephones as operator devices [4] in the calling environment of the modular dialing controller [10]. It will be understood that the selection of any type of a standard format or protocol for telephone calls made within the system method of the present invention is contemplated within the scope hereof.

In addition to translating the actual signals taking place during a telephone call, the interchangeable subscriber service module [12] of the present invention might also have contained thereon the necessary components to enable the interchangeable subscriber service module [12] to actually instigate and connect telephone calls using the subscriber service [2] connected thereto. If the interchangeable subscriber service module [12] were to be connected to a digital telephone system the only components which might be required would be circuitry or components capable of receiving, via the subscriber service module interface [15], from the main control unit [11], telephone numbers or other telephone dialing data from the modular dialing controller [10], which itself may have in turn received that information from a central computer [7] elsewhere by a connection [6] of some type, and those components would then need to be capable simply of triggering the "picking up" of a digital telephone line attached to the interchangeable subscriber service module [12] and/or then sending the necessary digital dialing instructions to the PBX or digital switch to allow for the dialing of the telephone call on that particular line. In a digital environment it can also be envisioned that there may be a separate connection to go to the switching equipment such that in another type of a phone system the control commands from the modular dialing controller [10] to the switch would actually be sent by a separate network connection and then the necessary connections between the switch and the lines connected to the modular dialing controller [10] via the interchangeable subscriber service module [12] would take place in that fashion. For example, in that type of a situation, the interchangeable subscriber service module [12] might receive information from the modular dialing controller [12] regarding a number to be called and might by way of its separate network connection to the telephone system's switch send the instructions to dial a call and the switch would then dial the call and connect the call back to one of the incoming lines on the interchangeable subscriber module [12].

In another example, where simple outside telephone lines were used, the interchangeable subscriber service module [12] might contain the necessary circuitry or control functions to effectively "pick up" a free telephone line and send the necessary DTMF, rotary or pulse dial or other signals on that line to the telco switch, resulting in the completion of a telephone call in that fashion. Once the telephone call was dialled or instigated, the signal or call on that particular line or that particular portion of the connected service could then be handed off to the main controller unit [11] by way of the subscriber module interface [15], in its standardized format, for connection to an operator device [4].

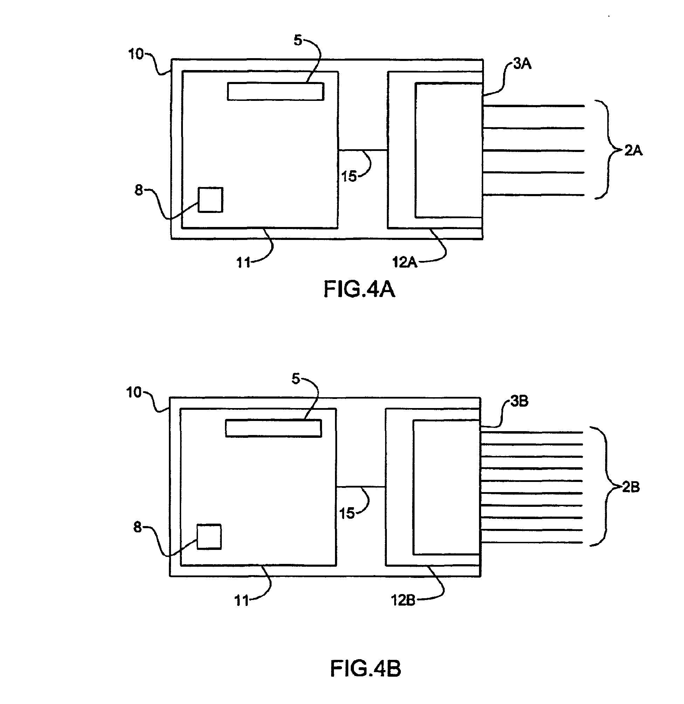

Referring to Figure 4a, this Figure illustrates an embodiment of a modular dialing controller [10] which is configured with a first interchangeable subscriber module [12a] that connects to a first subscriber service [2a]. Now referring to Figure 4b, the same modular dialing controller [10] is shown, however, the modular dialing controller [10] has been reconfigured to connect to a second subscriber service [2b] by replacing the first interchangeable subscriber service module with a second interchangeable subscriber module [12b]. The first subscriber service [2a] and the second subscriber service [2b] can differ either in the physical connection required to access the services or in the type of service that is provided.

In addition to providing for the ability to relatively quickly convert the modular dialing controller [10] of the present invention for use with various types of analog telephone service, the interchangeable subscriber service module [12] concept of the present invention is also exciting in terms of the functionality which it provides in terms of connectivity of the device of the present invention to various new types of digital communications services as well. For example, an interchangeable subscriber service module [12] could be created which would connect directly to a T1 line or make some other type of a computer network connection and could then instigate calls using voice over IP or some other type of a digital telephony protocol. In this instance, while the modular dialing controller [10] would be able to instigate and connect a number of calls at one time, the computer network connection that makes up the subscriber service [2] could consist of only a single physical line.

It will be understood that any type of communication protocol in terms of an outside communication or telephone subscriber service is contemplated within the scope of the present invention. Any such type of a outside telephone service or line could be accommodated by producing an interchangeable subscriber service module [12] which could be connected thereto and which interchangeable subscriber service module [12] would have the necessary capability to receive or make telephone calls using that type of a subscriber service [2] and standardize those calls for connection via the main control unit [11] to operator devices [4] connected to or in communication therewith. The interchangeable subscriber service module [12] can also contain any other supplemental hardware or software components which were required to instigate telephone calling in a particular environment or location. It can even be envisioned that there might be different types of interchangeable subscriber service modules [12] with the same types of physical connectivity which had different components or circuitry associated therewith since a particular local telephone company or service provider used a different method of instigating telephone calls but still used the same type of a delivery method.

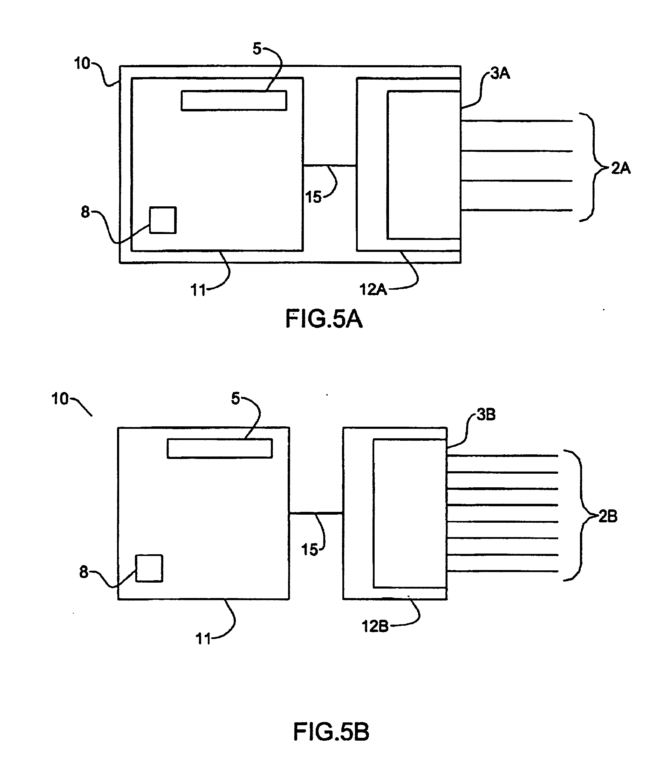

The interchangeable subscriber service module [12] of the system of the present invention would be connected to the main controller unit [11] by some type of a standard connection or subscriber service module interface [15]. This subscriber service module interface [15] or bus could either physically comprise a slot as shown in Figure 5a or a cable connector as shown in Figure 5b or the like for connection of the interchangeable subscriber service module [12] to the main controller unit [11] of the modular dialing controller [10].

It will be understood the various types of physical connectors or connection methods could be used as the subscriber service module interface [15] to connect the hardware of the interchangeable subscriber service module [12] to the hardware of the main controller unit [11] and all such physical connectivity methods are contemplated within the scope of the present invention.

The modular dialing controller [10] of the present invention would, in addition to providing connections and support for the plurality of operator devices [4] and or providing a connection [6] for communication between the modular dialing controller [10] of the invention, be connectable to a controller computer [7] containing a database of telephone numbers and other calling information. It will be understood that physically speaking the interchangeable subscriber service module [12] of the present invention can either take the form of an actual card which could be placed in a slot on the modular dialing controller [10], or alternatively might also constitute a separate module which would be connected to the main unit [11] by way of a cable or in some other fashion. It will be understood that the functionality would be the same in either event and that both such approaches are contemplated within the scope of the present invention. In order to accommodate an interchangeable subscriber service module [12], the modular dialing controller [10] itself would need to be provided with a slot or other mounting means for the attachment of the interchangeable connectivity hardware.

The present invention provides a modular dialing controller [10] which has an interchangeable subscriber service module [12] which can be exchanged to provide for different types or levels of outside telephone network conductivity to the modular dialing controller [10] and ergo the human operators thereon. One type of an extended flexibility which this interchangeable subscriber service module [12] concept could offer to even a modular dialing controller [10] used in a typical North American dialing environment, would be to allow for the ability to expand the outside line capacity of the modular dialing controller [10] without upgrading all of the hardware. For example, referring to Figures 4a and 4b, if a user were to originally purchase a modular dialing controller [10] in accordance with the present invention that was capable of connecting to a first subscriber service [2a] that had four outside subscriber telephone lines, that is to say the modular dialing controller [10] contained a first interchangeable subscriber service module [12a] with connections thereon for four subscriber telephone lines and they later wished to upgrade the modular dialing controller [10] to connect to a second subscriber service [2b] that provided that same type of service, but had eight subscriber telephone lines, it would be possible within the system and method of the present invention. The upgraded modular dialing controller [10] will not need any more internal capacity but will have more outside lines available.

This upgrade can be achieved using the system and method of the present invention by removing the first interchangeable subscriber service module [12a] and connecting a second interchangeable subscriber service module [12b] with, for example, eight subscriber line ports rather than four which would then allow for the connection of an additional four subscriber telephone lines to the controller. This would not require an upgrade of the entire hardware but rather just the exchange of the first interchangeable subscriber service module [12a] with the second interchangeable subscriber service module [12b], which would have eight instead of four connections for subscriber telephone lines thereon, as well as all of the other necessary hardware or software components to provide access to those additional subscriber telephone lines to the main controller unit [11] via the subscriber module interface [15] and the second interchangeable subscriber service module [12b].

The system and method of the present invention could be used with a predictive dialer as well as with a standard multiline dialing controller which did not employ predictive dialing logic. The utility of the present invention in either dialing environment will be obvious to one skilled in the art.

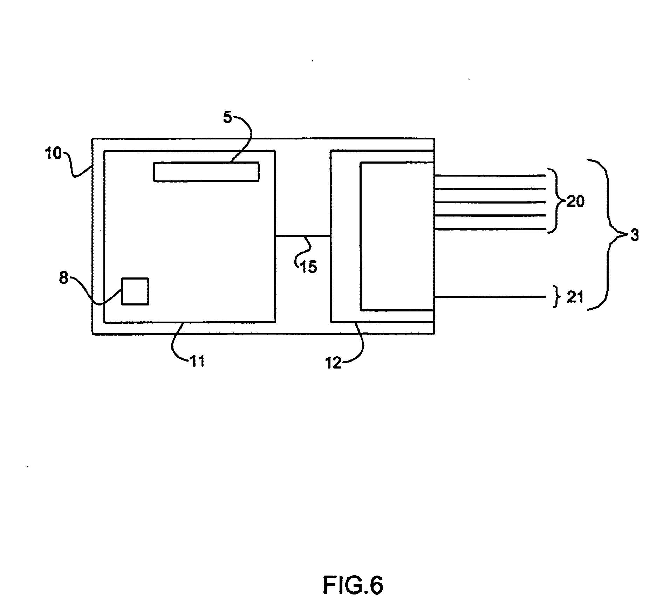

As outlined in further detail above, in addition to providing the ability to connect the modular dialing controller [10] of the present invention to different types of subscriber service [2], the interchangeable nature of the interchangeable subscriber module [12] of the present invention can also allow for the interchangeable extension of the outside line capacity of the modular dialing controller [10] of the present invention. For example, interchangeable subscriber service modules [12] could be produced which would simply provide access to more outside telephone lines, rather than telephone lines of different types, as outlined above. It can also be envisioned that interchangeable subscriber service modules [12] could be produced which would allow for the connection of the modular dialing controller [10] of the present invention to multiple types of subscriber telephone service at the same time. Figure 6 shows an embodiment of the dialing controller [10] where the interchangeable service module [12] allows the modular dialing controller [10] to connect to a subscriber service [2] that consists of a combination of several normal telephone lines [20] thereon, as well as a connection to some type of digital or computer network service [21] which would allow for the making of some calls using the normal telephone lines [20] and some calls using the digital service [21]. Again it will be understood that all such modifications such as these are contemplated within the scope of the present invention.

There is also disclosed herein a method of making telephone calls in a standardized dialing environment which would comprise the provision and the use of the modular dialing controller [10] and interchangeable subscriber service module [12] or module such as that described herein. Specifically, the method of facilitating calling in this type of environment would comprise providing a modular dialing controller [10] with an interchangeable subscriber service module [12], such as outlined in more detail herein.

Also there is disclosed herein a method of customizing a modular dialing controller [10] to connect with a desired subscriber service [2]. A modular dialing controller [10] would be provided without an attached interchangeable subscriber service module [12]. A desired subscriber service [2] would then be determined. This desired subscriber service [2] would comprise a type of service, physical connection and number of lines or any combination of types of services and number of lines for each. Next an interchangeable subscriber service module [12] that is connectable to the desired subscriber service [2] would be selected. This interchangeable subscriber service module [12] would then be connected to the modular dialing controller [10]. Connecting the interchangeable subscriber service module [12] to the modular dialing controller [10] would have the operative effect of making the modular dialing controller [10] connectable, via the interchangeable subscriber service module [12], to the desired subscriber service. Using this method the modular dialing controller [10] can be customizable for connection to any of a number of different subscriber services [2] by selecting and connecting the appropriate interchangeable subscriber service module [12].

Thus it can be seen that the invention accomplishes all of its stated objectives. The foregoing is considered as illustrative only of the principles of the invention. Further, since numerous changes and modifications will readily occur to those skilled in the art, it is not desired to limit the invention to the exact construction and operation shown and described, and accordingly, all such suitable changes or modifications in structure or operation which may be resorted to are intended to fall within the scope of the claimed invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A modular dialing controller for use in the origination of telephone calls via a subscriber service and connecting said telephone calls to at least one operator device, said controller comprising:
a) a main controller unit; and
b) an interchangeable subscriber service module operatively connectable to said main controller unit and operatively connectable to a subscriber service;
wherein said modular dialing controller can be converted from being connectable to a first subscriber service to being connectable to a second subscriber service by disconnecting a first interchangeable subscriber service module connectable to said first subscriber service from said main controller unit and connecting a second interchangeable subscriber service module connectable to said second subscriber service to said main controller unit.

2. The dialing controller of Claim 1 wherein a different type of physical connection is required between said modular dialing controller and said first subscriber service than is required between said modular dialing controller and said second subscriber service.

3. The dialing controller of Claim 1 wherein said first subscriber service is a different type of service than said second subscriber service.

4. The dialing controller of Claim 1 wherein said first subscriber service is the same type of service as said second subscriber service with different call capacity.

5. The dialing controller of Claim 4 wherein said first subscriber service comprises individual telephone lines, and wherein said second subscriber service comprises a different number of individual telephone lines than said at least one first subscriber service.

6. The dialing controller of Claim 1 wherein said interchangeable subscriber service module is connected to said main control unit via a subscriber service module interface.

7. The apparatus of Claim 6 wherein said subscriber service module interface is an internal slot.

8. The apparatus of Claim 6 wherein said subscriber service module interface is a cable.

9. The dialing controller of Claim 1 wherein said first subscriber service consists of one type of service.

10. The dialing controller of Claim 1 wherein said first subscriber service consists of a combination of more than one type of service.

11. The dialing controller of Claim 1 wherein said second subscriber services consists of one type of service and physical connection.

12. The dialing controller of Claim 1 wherein said second subscriber services consists of a combination of more than one type of service.

13. The dialing controller of Claim 1 wherein said at least one operator device is a telephone.

14. A modular dialing controller for use in the origination of telephone calls via a subscriber service and connecting said telephone calls to at least one operator device, said controller being customizable to be connectable to any of a plurality of subscriber services and comprising:
a) a main controller unit; and
b) one of a plurality of interchangeable subscriber service modules connectable to said main controller unit and operatively connectable to one of said plurality of subscriber services;
wherein said modular dialing controller can be customized to be operatively connectable to a desired subscriber service selected from said plurality of subscriber services by connecting a corresponding interchangeable subscriber service module that is operatively connectable to said desired subscriber services.

15. The dialing controller of Claim 14 wherein said desired subscriber service has one type of service.

16. The dialing controller of Claim 14 wherein said desired subscriber service is a combination of more than one type of service.

17. The dialing controller of Claim 14 wherein said corresponding interchangeable subscriber service module connects to said main control unit via a subscriber service module interface.

18. The dialing controller of Claim 17 wherein said subscriber service module interface is an internal slot

19. The dialing controller of Claim 17 wherein said subscriber service module interface is a cable.

20. The dialing controller of Claim 14 wherein said modular dialing controller can be converted from being connectable to said desired subscriber service to being connectable to a second desired subscriber service by disconnecting said one of a plurality of interchangeable subscriber service modules from said main controller unit and connecting a second interchangeable subscriber service module connectable to said second desired subscriber service to said main controller unit.

21. A modular dialing controller for use in the origination of telephone calls via a subscriber service and connecting said telephone calls to at least one operator device, said controller comprising:
a) a main controller unit; and
b) a subscriber service module interface connected to said main controller unit and connectable to an interchangeable subscriber service module, said interchangeable subscriber service module operatively connectable to one of a plurality of subscriber services;
and wherein said modular dialing controller can be converted from being connectable to a first subscriber service to being connectable to a second subscriber service by disconnecting a first interchangeable subscriber service module connectable to said first subscriber service from said subscriber service module interface and connecting a second interchangeable subscriber service module connectable to said second subscriber service to said subscriber service module interface.

22. An interchangeable subscriber service module for use with a modular dialing controller in the origination of telephone calls via a subscriber service and connecting said telephone calls to at least one operator device, said interchangeable subscriber service module operatively connectable to one of a plurality of subscriber services and operatively connectable to said modular dialing controller
wherein said interchangeable subscriber service module can be used to customize said modular dialing controller for connection to a particular desired subscriber service by connecting a selected interchangeable subscriber service module which is connectable to said selected subscriber service to said modular dialing controller.

23. A method of customizing a modular dialing controller to connect with a desired subscriber service, which comprises the steps of:
a) providing a modular dialing controller;
b) determining a desired subscriber service;
c) providing an interchangeable subscriber service module connectable to said modular dialing controller and connectable to said desired subscriber service; and
d) connecting said interchangeable subscriber service module to said modular dialing controller.
